# EUROPÄISCHE PATENTSCHRIFT

(11) **EP 3 412 497 B1**
(45) Veröffentlichungstag und Bekanntmachung des Hinweises auf die Patenterteilung: **24.08.2022**
(21) Anmeldenummer: 18173617.4
(22) Anmeldetag: 22.05.2018
(51) Int. Cl.: B60L 53/14, B60L 53/30, B60L 53/35, B60L 53/62

(54) **LADEVORRICHTUNG FÜR ELEKTROFAHRZEUGE**
CHARGING DEVICE FOR ELECTRIC VEHICLES
DISPOSITIF DE CHARGEMENT POUR VÉHICULES ÉLECTRIQUES

(30) Priorität: 09.06.2017 DE 102017005508; 30.08.2017 DE 102017119930
(43) Veröffentlichungstag der Anmeldung: 12.12.2018
(73) Patentinhaber: MAN Truck & Bus SE, 80995 München (DE)
(72) Erfinder: Schönherr, Stephan, 86153 Augsburg (DE); Schmidt-Robin, Rolf, 80995 München (DE); Darul, Jadranka, 82008 Unterhaching (DE)
(74) Vertreter: v. Bezold & Partner Patentanwälte - PartG mbB

(56) Entgegenhaltungen:
- EP-A2- 2 551 145
- CN-A- 106 143 199
- DE-A1-102014 226 357
- DE-C- 222 885
- JP-A- 2009 249 856
- JP-A- 2012 090 407
- JP-A- 2015 053 811
- US-A1- 2010 102 775
- US-A1- 2011 074 351
- US-A1- 2014 354 229

## Beschreibung

Die Erfindung betrifft eine Vorrichtung zum Laden mindestens eines Elektrofahrzeugs, insbesondere eines Nutzfahrzeugs mit elektrifiziertem Antriebsstrang.

Zum Beladen und Entladen der Güter eines Einzelfahrzeugs (beispielsweise eines Lastkraftwagens oder eines Sattelzugs) oder eines Anhängerverbands sind bestimmte Halteplätze vorgesehen, beispielsweise angrenzend an Laderampen oder Ladetore. Jedoch sind die Ladebuchsen zum elektrischen Aufladen des elektrifizierten Antriebsstrangs, insbesondere bei Nutzfahrzeugen, uneinheitlich am Elektrofahrzeug positioniert. Selbst bei definierten Parkpositionen, beispielsweise vor einem Ladetor, muss je nach Fahrzeuglänge und Fahrzeugtyp der Ladestrom an unterschiedlichen Seiten des Elektrofahrzeugs, unterschiedlichen Seitenpositionen und unterschiedlichen Höhen bereitgestellt werden.

Eine mögliche Lösung kann in hinreichend langen Ladekabeln gesucht werden. Jedoch ist aufgrund des hohen Ladestroms die Länge des Ladekabels begrenzt. Auch ist das Ladekabel mit zunehmender Länge schwer aufgrund der großen Leiterquerschnitte und der für Witterung und hohe mechanische Belastungen ausgelegten Isolierung. Ferner muss ein langes Ladekabel mühsam bis zur Ladebuchse gezogen werden, wobei das Ladekabel mit der Parkfläche und den Reifen des Elektrofahrzeugs in Kontakt kommt und dadurch stark verschmutzt. Am Ende des Ladevorgangs muss das schwere und verschmutzte Ladekabel zu einer Aufbewahrungsstelle außerhalb der Parkfläche zurückgetragen werden.

Ferner blockiert der schlängelnde Verlauf eines langen Ladekabels Rangierflächen und benachbarte Halteflächen. Bei Schneefall kann das Ladekabel von der Schneedecke verdeckt sein und beim Rangieren der an- und abfahrenden Elektrofahrzeuge überrollt werden.

Eine weitere Lösung kann in einer Mehrzahl an Ladesäulen je Haltefläche für ein Elektrofahrzeug gesucht werden. Beispielsweise kann an jeder Ecke der Haltefläche eines Elektrofahrzeugs jeweils eine Ladesäule vorgesehen sein. Jedoch schränkt eine solche Vielzahl an Ladesäulen die Zu- und Abfahrtswege der Elektrofahrzeuge ein, vervielfacht die Kosten für Installation und Wartung der Ladesäulen und ist bei bestehenden Parkflächen aufwändig nachzurüsten, da die Ladesäulen unter der Parkfläche verkabelt werden müssen statt sie von einem einheitlichen Rand der Parkfläche mit Strom zu versorgen.

Ferner können die Halteplätze zum elektrischen Aufladen von Elektrofahrzeugen unbestimmt sein. Beispielsweise müssen Nutzfahrzeuge auf einem Betriebshof, insbesondere Busse außerhalb des Linienbetriebs, möglichst dicht geparkt sein, so dass aus unterschiedlichen Fahrzeuggrößen und unterschiedlichen Einrückzeiten eine täglich wechselnde Parkaufteilung resultiert.

Zum allgemeinen Stand der Technik kann auch noch verwiesen werden auf z. B. die US 2010/102775 A1 und die CN 106 143 199 A.

Somit besteht die Aufgabe, eine Ladetechnik für Elektrofahrzeuge anzugeben, die das Laden unterschiedlicher Fahrzeugtypen ermöglicht. Eine alternative oder weitergehende Aufgabe ist, eine Ladetechnik für Elektrofahrzeuge anzugeben, die variable Parkpositionen oder wechselnder Parkaufteilungen der Elektrofahrzeuge ermöglicht.

Diese Aufgabe oder Aufgaben werden durch eine Vorrichtung zum Laden mindestens eines Elektrofahrzeugs und einen mit einer solchen Ladevorrichtung ausgestatteten Halteplatz mit den Merkmalen der unabhängigen Ansprüche gelöst. Vorteilhafte Ausführungsformen und Anwendungen der Erfindung zum Gegenstand der abhängigen Ansprüche werden in der folgenden Beschreibung unter teilweiser Bezugnahme auf die Figuren näher erläutert.

Gemäß einem Aspekt umfasst die Vorrichtung mindestens eine stationäre Leistungselektronik, die jeweils dazu ausgebildet ist, einen Ladestrom zum Laden eines elektrischen Energiespeichers eines Elektrofahrzeugs, vorzugsweise eines Traktionsenergiespeichers eines Elektrofahrzeugs, bereitzustellen; einen Träger, der vorzugsweise sich horizontal erstreckt und/oder horizontal ausziehbar ist; und mindestens eine vom Träger beweglich gestützte Ladestelle, welche mit der mindestens einen stationären Leistungselektronik elektrisch verbunden ist, und an welcher mindestens ein Ladekabel, vorzugsweise mit einem Ladestecker, zur Bereitstellung des Ladestroms angeordnet ist.

Beispielsweise umfasst die Vorrichtung mindestens eine stationäre Leistungselektronik, die jeweils dazu ausgebildet ist, einen Ladestrom zum Laden eines elektrischen Traktionsenergiespeichers eines Elektrofahrzeugs bereitzustellen; einen sich horizontal erstreckenden oder horizontal ausziehbaren Träger; und mindestens eine vom Träger gestützte und horizontal bewegliche Ladestelle, welche mit der mindestens einen stationären Leistungselektronik elektrisch verbunden ist, und an welcher mindestens ein Ladekabel mit einem Ladestecker zur Bereitstellung des Ladestroms angeordnet ist.

Die Ladestelle kann mit dem (beispielsweise horizontal ausziehbaren) Träger horizontal beweglich sein. Beispielsweise kann die Ladestelle an einem horizontal beweglichen Ende des Trägers befestigt sein. Alternativ oder zusätzlich kann die Ladestelle längs des (beispielsweise sich horizontal erstreckenden) Trägers beweglich sein. Beispielsweise kann die Ladestelle am Träger horizontal geführt sein.

Das Elektrofahrzeug kann ein Batterie-Elektrofahrzeug (BEV) und/oder ein Plug-in-Hybridfahrzeug (PHEV) sein.

Der Träger und/oder die Ladestelle können sich auf einer Höhe oberhalb der zu ladenden Elektrofahrzeuge horizontal erstrecken und/oder beweglich sein, beispielsweise auf einer Höhe von mehr als 4 Metern über einer Haltefläche des Elektrofahrzeugs.

Der Ladestecker kann durch eine Schnittstelle (insbesondere eine elektrische Steckverbindung) zur Übertragung des Ladestroms zum Elektrofahrzeug realisierbar sein. Insbesondere kann die elektrische Verbindung zum Elektrofahrzeug durch eine mechanische Steckverbindung zwischen dem Ladestecker der Vorrichtung und einer fahrzeugseitigen Buchse gesichert sein. Zur elektrischen Verbindung mit dem Elektrofahrzeug kann der Ladestecker Metallbuchsen oder Metallstifte umfassen.

Der Ladestrom kann einen Gleichstrom, einen Wechselstrom oder einen Dreiphasenwechselstrom umfassen. Die Leistungselektronik kann mit einem Stromnetz (beispielsweise einem Wechselstromnetz) elektrisch verbunden oder verbindbar sein. Die Leistungselektronik kann dazu ausgebildet sein, einen Wechselstrom in den Ladestrom umzuwandeln.

Die Leistungselektronik und/oder eine an der Ladestelle angeordnete Ladestellenelektronik kann dazu ausgebildet sein, den Ladestrom zu steuern.

Der Ladestecker oder eine Funkschnittstelle der Vorrichtung kann zur Kommunikation mit einem Batteriemanagementsystem des Elektrofahrzeugs ausgebildet sein. Die Leistungselektronik und/oder eine an der Ladestelle angeordnete Ladestellenelektronik kann dazu ausgebildet sein, den Ladestrom aufgrund der Kommunikation zu steuern.

Der Träger umfasst mindestens eine sich in der Längsrichtung des Trägers erstreckende Schiene. Die Ladestelle umfasst mindestens eine Laufrolle, die auf der Schiene längsbeweglich aufliegt.

Beispielsweise kann die Ladestelle eine Laufkatze oder einen Schlitten umfassen. Je zwei Laufrollen können auf einer Achse der Ladestelle angeordnet sein. Die Laufkatze oder der Schlitten kann ein Rollenpaar oder zwei Rollenpaare umfassen. Die mindestens eine Schiene kann ein Unterflansch oder zwei gegenüberliegende Unterflansche des Trägers umfassen.

Die Vorrichtung kann einen elektrischen Antrieb umfassen, der dazu ausgebildet ist, die mindestens eine Ladestelle entlang der Längsrichtung des Trägers zu bewegen.

Die Ladestelle oder jede Ladestelle kann dazu ausgebildet sein, eine Ladeposition relativ zum Elektrofahrzeug zu bestimmen und sich durch die Längsbewegung der bestimmten Ladeposition zu nähern.

Das mindestens eine Ladekabel kann von der vom Träger gestützten Ladestelle herabhängen. Das mindestens eine Ladekabel kann zugfest an der Ladestelle angeordnet sein, beispielsweise für eine Zugkraft zur horizontalen Bewegung der Ladestelle. Die über das zugfest angeordnete Ladekabel auf die Ladestelle übertragbare Zugkraft kann die Längsbewegung der Ladestelle entlang des Trägers, die Ausziehbewegung des Trägers und/oder die Schwenkbewegung des Trägers bewirken.

Das mindestens eine Ladekabel kann an der horizontal beweglichen Ladestation aufrollbar und/oder zugelastisch angeordnet sein.

An der Ladestelle, beispielsweise an der Laufkatze oder dem Schlitten, kann eine Kabelrolle zur Aufnahme des Ladekabels angeordnet sein. Alternativ oder ergänzend kann die Ladestelle eine Spiralfeder und/oder ein aufrollbares Halteseil umfassen, die bzw. das an einem freien Ende mit dem Ladekabel (beispielsweise an oder nahe am Ladestecker) verbunden ist.

Der Träger umfasst ein ortsfestes Ende und ein bewegliches Ende. Der Träger kann um das ortsfeste Ende schwenkbeweglich sein. Der Träger kann am ortsfesten Ende ein Gelenk mit einer vertikalen Schwenkachse umfassen, beispielsweise für die horizontale Schwenkbewegung des Trägers um das ortsfeste Ende.

Durch Kombination der Schwenkbewegung des Trägers mit der Längsbewegung der Ladestelle und/oder mit der Ausziehbewegung des Trägers kann die Ladestelle in einem Kreis oder Kreisabschnitt (beispielsweise einem Kreissegment) um das ortsfeste Ende des Trägers frei positionierbar sein.

Die stationäre Leistungselektronik kann am ortsfesten Ende des Trägers oder an einer Stütze des ortsfesten Endes angeordnet sein. Die Stütze kann ein Pfosten oder eine Mauer umfassen, an dem bzw. an der das ortsfeste Ende (ggf. schwenkbeweglich) befestigt ist.

Das bewegliche Ende des Trägers kann horizontal beweglich sein. Das horizontal bewegliche Ende des Trägers kann aufgrund der Ausziehbarkeit des Trägers (beispielsweise radial) beweglich und/oder aufgrund der Schwenkbeweglichkeit des Trägers (beispielsweise azimutal) beweglich sein.

Der Träger kann mechanisch ausziehbar sein. Der Träger kann eine Teleskopmechanik oder eine Scherenmechanik umfassen. Die Scherenmechanik kann zur vertikalen Stützung der Ladestation (beispielsweise zur Steifigkeit des Trägers unter einem durch die Gewichtskraft und/oder die Zugkraft an der Ladestelle verursachten Biegemoment) vertikal angeordnet sein. Die Ladestelle kann in jeder Position der horizontalen Bewegung mit der mindestens einen stationären Leistungselektronik elektrisch verbunden sein.

Die elektrische Verbindung zwischen der mindestens einen Leistungselektronik und der beweglichen Ladestelle kann ein an mehreren Zwischenstellen am Träger längsbeweglich abgestütztes Stromkabel umfassen. Das Stromkabel kann entlang des Trägers an mehreren Befestigungsstellen längsbeweglich mit dem Träger verbunden sein.

Die elektrische Verbindung zwischen der mindestens einen Leistungselektronik und der mindestens einen beweglichen Ladestelle umfasst Stromleiter, die sich entlang des Trägers erstrecken. Die elektrische Verbindung zwischen der mindestens einen Leistungselektronik und der mindestens einen beweglichen Ladestelle umfasst Stromabnehmer seitens der beweglichen Ladestelle. Die Stromabnehmer sind dazu ausgebildet, je einen der Stromleiter zu kontaktieren.

Verschiedene Ladestellen können separate Stromleiter umfassen. Die separaten Stromleiter der verschiedenen Ladestellen desselben Trägers können parallel am Träger angeordnet sein. Die Ladestellenelektronik und/oder die Leistungselektronik können einen Stromrichter umfassen zur Bereitstellung einer Ladespannung, des Ladestroms und/oder einer Ladeleistung.

Die Ladestation kann ferner eine Benutzereinheit zur Ablage des Ladesteckers und/oder eine Benutzerschnittstelle zur Bedienung der Ladestelle umfassen.

Ein weiterer Aspekt betrifft einen Halteplatz für mindestens ein Elektrofahrzeug, insbesondere ein Nutzfahrzeug. Der Halteplatz umfasst eine Vorrichtung gemäß dem vorstehenden Aspekt. Die mindestens eine Leistungselektronik kann an eine stationäre Stromquelle angeschlossen sein. Mindestens ein Ende des Trägers kann am Halteplatz ortsfest befestigt sein. Der Träger kann an dem ortsfesten Ende schwenkbeweglich befestigt sein.

Der Halteplatz kann einen Parkplatz, einen Parkhafen, einen Betriebshof, ein oder mehrere Ladetore und/oder eine Laderampe für das mindestens eine Elektrofahrzeug umfassen.

Das Elektrofahrzeug kann ein Nutzfahrzeug sein. Insbesondere kann das Nutzfahrzeug ein Omnibus (kurz: Bus), ein Lastkraftwagen oder eine Sattelzugmaschine sein.

Insbesondere bei Nutzfahrzeugen variieren Fahrzeuglänge und Position der Ladebuchse. Die Vorrichtung ist insbesondere vorteilhaft zum Laden von Nutzfahrzeugen, da die Halteposition eines Nutzfahrzeugs oft durch andere Zwänge als den elektrischen Ladevorgang (beispielsweise durch die Güterbe- und Entladung, oder durch die Nutzung von Fahrzeugaufbauten) bestimmt ist.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: eine schematische Darstellung eines ersten Ausführungsbeispiels der Vorrichtung zum Laden mindestens eines Elektrofahrzeugs;
- Figuren 2A bis 2D: schematische Darstellungen beispielhafter Verläufe eines Trägers der Ladevorrichtung;
- Figur 3: eine schematische Draufsicht eines zweiten Ausführungsbeispiels der Ladevorrichtung;
- Figur 4: eine schematische Seitenansicht eines dritten Ausführungsbeispiels der Ladevorrichtung mit optional angetriebener Beweglichkeit;
- Figur 5: eine schematische Seitenansicht eines vierten Ausführungsbeispiels der Ladevorrichtung mit manueller Beweglichkeit;
- Figur 6: eine schematische Seitenansicht eines fünften Ausführungsbeispiels der Ladevorrichtung für mehrere Ladetore;
- Figur 7: eine schematische Draufsicht eines sechsten Ausführungsbeispiels der Ladevorrichtung für mehrere Ladetore;
- Figur 8: eine perspektivische Darstellung eines siebten Ausführungsbeispiels der Ladevorrichtung für ein Ladetor;
- Figur 9: eine schematische Seitenansicht eines beispielhaften Trägers der Ladevorrichtung; und
- Figuren 10A bis 10C: schematische Querschnitte beispielhafter elektrischer Verbindungen am Träger der Ladevorrichtung.

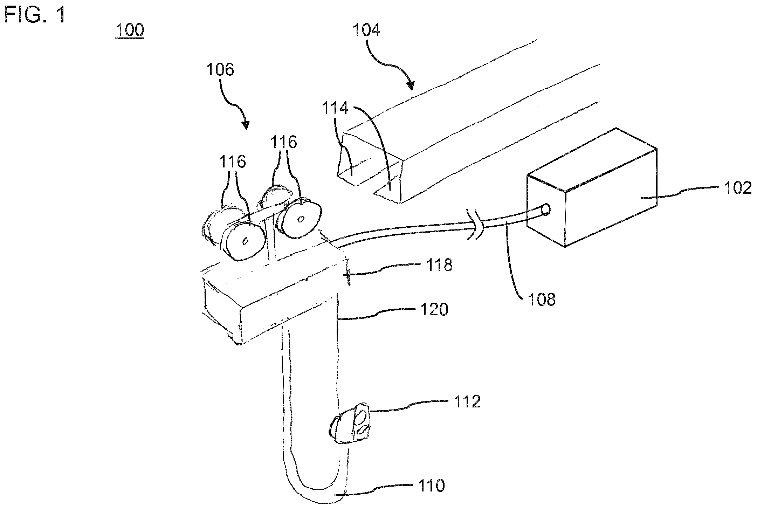

Figur 1 zeigt eine allgemein mit Bezugszeichen 100 bezeichnete Vorrichtung zum Laden mindestens eines Elektrofahrzeugs. Die Vorrichtung 100 umfasst mindestens eine stationäre Leistungselektronik 102, die jeweils dazu ausgebildet ist, einen Ladestrom zum Laden eines elektrischen Traktionsenergiespeichers eines Elektrofahrzeugs bereit zu stellen. Ferner umfasst die Vorrichtung 100 einen sich horizontal erstreckenden oder horizontal ausziehbaren Träger 104, und mindestens eine vom Träger 104 gestützte und horizontal bewegliche Ladestelle 106. Die Ladestelle 106 ist, wie beim Bezugszeichen 108 schematisch dargestellt, mit der mindestens einen stationären Leistungselektronik 102 elektrisch verbunden. An der oder jeder horizontal beweglichen Ladestelle 106 ist mindestens ein Ladekabel 110 mit einem Ladestecker 112 zur Bereitstellung des Ladestroms angeordnet.

Der Ladestecker 112 ist beispielsweise gemäß der CHAdeMO-Schnittstelle, der einphasigen Schnittstelle Typ 1 (gemäß SAE J1772/2009) oder der dreiphasigen Schnittstelle Typ 2 (gemäß EN 62196 Typ 2) ausgebildet. Ferner kann der Ladestecker gemäß dem Combined Charging System (CCS) ausgebildet sein. Insbesondere kann der Ladestecker 112 separate Gleichstromkontakte gemäß Combo-2 umfassen (auch: CCS2).

In einer ersten Ausgestaltungsvariante, beispielsweise gemäß dem in Figur 1 schematisch gezeigten ersten Ausführungsbeispiel, ist die Ladestelle 106 entlang dem Träger 104 längsbeweglich angeordnet. In einer zweiten Ausgestaltungsvariante, die mit der ersten Variante kombinierbar ist, ist der Träger 104 in seiner Längsrichtung ausziehbar. Die längsbewegliche Ladestelle 106 kann in der zweiten Ausgestaltungsvariante an einem beweglichen Ende des Trägers 104 befestigt sein.

Im in Figur 1 gezeigten ersten Ausführungsbeispiel der Vorrichtung 100 umfasst der Träger 104 ein Paar paralleler Schienen 114, auf denen die Laufrollen 116 einer Laufkatze oder eines Schlittens der Ladestelle 106 bei der Längsbewegung der Ladestelle 106 abrollen. Die Schienen 114 können, wie im ersten Ausführungsbeispiel der Figur 1 schematisch gezeigt, innenliegend sein, beispielsweise vom Träger 104 umschlossen. Alternativ können die Schienen 114 freiliegend sein, beispielsweise als Unterflansche eines Doppel-T-Trägers 104.

An der horizontal beweglichen Ladestelle 106 kann der von der Leistungselektronik 102 bereitgestellte Ladestrom direkt zum Ladekabel 110 durchgeleitet werden. Alternativ oder zusätzlich kann eine Ladestellenelektronik 118 für die horizontal bewegliche Ladestelle 106 an dieser angeordnet sein. Die Ladestellenelektronik 118 an der Ladestelle 106 kann die Funktionalität der Leistungselektronik 102 teilweise übernehmen oder kann diese vollständig ersetzen. Beispielsweise kann die Leistungselektronik 102 extern der Ladestelle 106 einen Gleichrichter umfassen oder der Gleichrichter ist Teil der Ladestellenelektronik 118. Ferner kann der Gleichrichter in der Leistungselektronik 102 eine bestimmte Spannung über die elektrische Verbindung 108 bereitstellen, und die Ladestellenelektronik 118 kann (beispielsweise durch Pulsweitenmodulation) den Ladestrom durch das Ladekabel 110 steuern.

Die Steuerung des durch das Ladekabel 110 fließenden Ladestroms erfolgt nach Vorgabe eines Batteriemanagementsystems (BMS) seitens des Elektrofahrzeugs. Zur Steuerung des Ladestroms und/oder zu weiteren Funktionen kommuniziert die Ladestellenelektronik 118 über Signalkontakte des Ladesteckers 112 mit dem BMS. Beispielsweise kann das BMS einen Ladezustand an die Ladestellenelektronik 118 signalisieren.

Im Fall mehrerer an der Ladestelle 106 angeordneter Ladekabel 110 kann die Ladestellenelektronik 118 den von der Leistungselektronik 102 über die elektrische Verbindung 108 bereitgestellten Gesamtladestrom oder einen Maximalstrom nach Maßgabe der Kommunikation mit den jeweiligen Batteriemanagementsystemen der Elektrofahrzeuge auf die jeweiligen Ladekabel 110 verteilen, beispielsweise durch komplementäre Pulsweitenmodulation.

In jeder Ausgestaltungsvariante und in jedem Ausführungsbeispiel kann die Ladestellenelektronik 118 ferner eine Bedieneinheit und/oder eine Anzeigeeinheit zur Bedienung bzw. Überwachung eines Ladevorgangs an der jeweiligen Ladestelle 106 umfassen. Beispielsweise wird der fahrzeugseitig über den Ladestecker 112 oder eine separate Funkschnittstelle signalisierte Ladezustand von der Ladestellenelektronik 118 einem Benutzer am Ort der beweglichen Ladestelle 106 angezeigt. Die Anzeigeeinheit umfasst beispielsweise einen an der Ladestelle 106 befestigten Monitor und/oder eine in den Rücken des Ladesteckers 112 integrierte Anzeige.

Alternativ oder ergänzend kann der Benutzer an der Bedieneinheit eine Haltezeitdauer (beispielsweise zum Be- und/oder Entladen) des Elektrofahrzeugs am Halteplatz eingeben. Die Ladestellenelektronik 118 begrenzt auf Grundlage des signalisierten Ladezustands und der eingegebenen Haltezeitdauer den Ladestrom, um die Anzahl der Ladezyklen des Energiespeichers zu optimieren.

Vorzugsweise umfasst die Ladestelle 106 eine Aufnahme zur Verwahrung des Ladesteckers 112, wenn dieser nicht am Elektrofahrzeug eingesetzt ist. Ferner kann der Ladestecker 112, wie schematisch im ersten Ausführungsbeispiel der Figur 1 gezeigt, in einer manuell oder durch elektrischen Antrieb veränderlichen Höhe an einem Halteseil 120 angebunden sein. Das Halteseil 120 ist über eine vorgespannte Rolle an der Ladestelle 106 aufwickelbar. Für eine manuell veränderliche Höhe ist die Rolle durch eine gleichmäßige erste Zugbewegung bis zur Soll-Höhe des Ladesteckers 112 arretierbar. Durch eine ruckartige zweite Zugbewegung am Halteseil 120 ist die Arretierung der Rolle lösbar, wodurch sich aufgrund der Vorspannung das Halteseil 120 entgegen der Gewichtskraft des Ladesteckers (und anteilig des Ladekabels 110) nach oben gezogen zur Rolle bewegt.

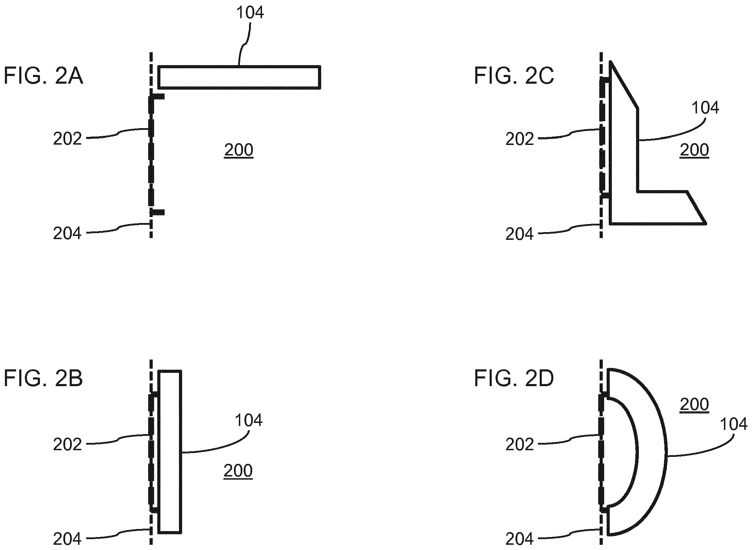

Die Vorrichtung 100 kann an einem Halteplatz 200 des Elektrofahrzeugs oder der mehreren Elektrofahrzeuge installiert sein. Figur 2A zeigt schematisch eine erste Anordnung des Trägers 104 relativ zu einem Halteplatz 200 mit einem Ladetor 202 an einer Laderampe 204 eines Gebäudes oder eines Containers. Wie in der schematischen Aufsicht der Figur 2A gezeigt, kann sich der Träger 104 an zumindest einer Seite neben dem Ladetor 202 senkrecht zur Laderampe 204 horizontal erstrecken. Um eine Rangierfläche um den Halteplatz 200 nicht einzugrenzen, ist der Träger 104 oberhalb der Fahrzeughöhe und/oder nur an seinem torseitigen Ende mit der Laderampe 204 befestigt. Die Befestigung kann starr oder um das torseitige Ende schwenkbeweglich sein. Ferner kann der Träger 104 außerhalb des Halteplatzes 200, d.h., in der vertikalen Projektion neben dem Halteplatz 200, angeordnet sein. Die Schwenkbewegung des Trägers 104 um das torseitige Ende kann durch einen Anschlag zum Ladetor 202 hin begrenzt sein, so dass der Träger 104 nicht über den Halteplatz 200 schwenkt. Dadurch kann der Träger 104 auch unterhalb der Fahrzeughöhe befestigt sein, ohne dass die Gefahr einer mechanischen Beschädigung des Elektrofahrzeugs durch den Träger 104 oder die bewegliche Ladestelle 106 besteht.

In der in Figur 2B gezeigten Anordnung ist der Träger 104 parallel zur Laderampe 204, beispielsweise mittig über dem Ladetor 202 angeordnet. Beide Enden des Trägers 104 sind an der Laderampe 204 befestigt.

Figur 2C zeigt eine dritte Anordnung, welche die erste und/oder zweite Anordnung ergänzen kann. Der Träger 104 und dessen Schienen 114 verlaufen über zwei Abschnitte durchgehend. Die Abschnitte schließen einen (beispielsweise rechten) Winkel ein. Ein erster Abschnitt des Trägers 104 und der Schienen 114 kann sich (beispielsweise entsprechend der ersten Anordnung) senkrecht von einer Stirnseite des Halteplatzes 200 und/oder parallel der Längsseite des Elektrofahrzeugs erstrecken. Ein zweiter Abschnitt des Trägers 104 und der Schienen 114 kann sich (beispielsweise entsprechend der zweiten Anordnung) quer und oberhalb des Ladetors 202 erstrecken. Die Ladestelle 106 kann am Scheitel des Winkels in der horizontalen Ebene drehbar am Träger 104 gelagert sein. Alternativ kann am Scheitel des Winkels ein Kurvenradius die Schienen 114 der Abschnitte durchgehend verbinden.

Figur 2D zeigt schematisch eine vierte Anordnung, bei welcher der Träger 104 und dessen Schienen 114 in der horizontalen Ebene gekrümmt sind, beispielsweise gemäß einem Ellipsenabschnitt, insbesondere einem Halbkreis. Die Enden des Trägers 104 sind jeweils an gegenüberliegenden Seiten des Ladetors 202 befestigt. Dadurch ist die Ladestelle 106 zu Ladebuchsen an unterschiedlichen Seiten der Elektrofahrzeuge und zu unterschiedlichen Positionen längs der Fahrzeugseite mit einem Träger 104 beweglich.

Während vorstehend Verläufe des Trägers 104 und der zugehörige Verlauf der Schienen 114 mit Bezug zu Ladetoren 202 und Laderampen 204 beschrieben sind, können diese Verläufe oder weiter angepasste Verläufe des Trägers 104 und dessen Schienen 114 auch an anderen Halteplätzen 200 und an anderen Gebäudeabschnitten installiert sein. Ferner können die in den Figuren 2A bis 2D schematisch gezeigten Verläufe miteinander kombiniert werden, beispielsweise für eine durchgehende und/oder verzweigende Bewegung der Ladestelle 106 entlang der Schienen 114. Hierzu können die Schienen 114 kombinierbare Abschnitte mit Graden, Kurven, Weichen, Kreuzungen für die Ladestelle 106 umfassen.

Die Vorrichtung 100 kann zum Laden elektrisch angetriebener Lastkraftwagen (einschließlich Zugmaschinen) direkt an der Laderampe 204 und/oder dem Ladetor 202 angeordnet sein. Durch die Beweglichkeit der Ladestelle 106 parallel zum Elektrofahrzeug sind fahrzeugseitige Ladebuchsen, die beispielsweise seitlich am Fahrerhaus oder zwischen Fahrerhaus und Laderaum des Elektrofahrzeugs angeordnet sind, sowohl bei einem Einzelfahrzeug (d.h. bei kurzem Abstand zwischen Ladetor 202 und Ladebuchse) als auch einem Anhängerverband (d.h. bei langem Abstand zwischen Ladetor 202 und Ladebuchse) erreichbar.

Auch können mehrere hintereinander stehende Elektrofahrzeuge (beispielsweise ein vernetzter Fahrzeugverband mehrerer hintereinander stehender Elektrofahrzeuge) mittels der Vorrichtung 100 geladen werden. Beispielsweise sind die Ladebuchsen der Elektrofahrzeuge über einen sich parallel der Elektrofahrzeuge erstreckenden Träger 104 erreichbar durch mehrere Ladekabel 110 an der Ladestelle 106 und/oder durch mehrere Ladestellen 106, die jeweils zu einem der hintereinander stehenden Elektrofahrzeuge bewegbar sind.

Die Vorrichtung 100 kann ein Laden einzelner oder mehrerer Elektrofahrzeuge, während diese einer Nutzung im Stand unterliegen, ermöglichen, beispielsweise direkt am Ladetor. Die Vorrichtung 100 kann abhängig von der Anzahl an Elektrofahrzeugen je Halteplatz 200 (beispielsweise je Ladeplatz oder je Ladetor 202) einen oder mehrere Träger 104, je Träger 104 eine oder mehrere bewegliche Ladestellen 106 und/oder je Ladestelle 106 ein oder mehrere Ladekabel 110 umfassen.

Eine Ladestelle 106 mit mehreren Ladekabeln 110 kann auch als E-Lade-Hub bezeichnet werden. Der einem Benutzer zugängliche Teil einer Ladestelle 106, beispielsweise das Ladekabel 110 mit dem Ladestecker 112 und der zugehörigen Aufnahme, sowie ggf. Anzeige- und Bedieneinheiten, kann zusammenfassend auch als Benutzereinheit bezeichnet werden.

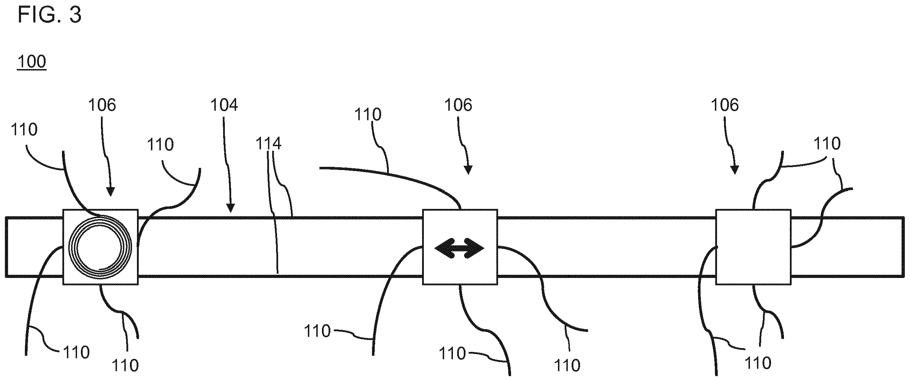

Figur 3 zeigt schematisch eine Draufsicht eines zweiten Ausführungsbeispiels einer Vorrichtung 100, die an einem Träger 104 mehrere (beispielsweise 3) längs des Trägers 104 bewegliche Ladestellen 106 aufweist. Die einzelnen Ladekabel 110, insbesondere der zugehörige Ladestecker, können durch ein Halteseil 120 gemäß dem ersten Ausführungsbeispiel auf einer variablen Höhe gehalten sein. Alternativ oder ergänzend ist zumindest ein Ladekabel 110 an zumindest einer Ladestelle 106 aufrollbar angeordnet. Dies ist für das in Figur 3 obere Ladekabel 110 der linken Ladestelle 106 gezeigt.

Die Vorrichtung 100 kann zum Laden einzelner elektrisch angetriebener Busse eingesetzt werden, auch wenn die Ladebuchsen an verschiedenen Stellen entlang des jeweiligen Busses angeordnet sind. Ferner kann die Vorrichtung zum Laden einer Vielzahl elektrisch angetriebener Busse eingesetzt werden. Beispielsweise kann ein Ausführungsbeispiel der Vorrichtung an einem Parkhafen für Elektrofahrzeuge, insbesondere Busse, installiert sein. Der Träger 104 kann sich oberhalb der Busse und installationsabhängig längs, quer und/oder schräg zu den einzelnen Bussen erstrecken.

Die Schienen 114 können (zumindest abschnittsweise) parallel zu den zu ladenden Elektrofahrzeugen verlaufen oder quer vor den Elektrofahrzeugen. Dabei können die Schienen 114, die Ladestelle 106 oder der von der Ladestelle 106 herabhängende Ladestecker 112 auf der Höhe der jeweiligen Ladebuchse angeordnet sein. Alternativ oder in Kombination können die Schienen 114 (zumindest abschnittsweise) quer zu den zu ladenden Elektrofahrzeugen verlaufen. Dabei können die Schienen 114, die Ladestelle 106 und (zumindest zeitweise) der von der Ladestelle 106 herabhängende Ladestecker 112 oberhalb des Dachs der Elektrofahrzeuge angeordnet sein.

Zum Beispiel ist die Ladestelle 106 situationsabhängig vor der Laderampe 204 in unterschiedlichen Abständen positionierbar. Die Ladestelle 106 kann bewegt werden auf die Höhe einer Vorderkante der Laderampe 204 oder auf die Höhe eines Fahrerhauses eines Einzelfahrzeugs, eines Anhänger-Verbands, eines Lang-Aufliegers oder eines Lang-LKWs (beispielsweise ein EuroCombi oder "Gigaliner").

Zudem kann die Vorrichtung 100 zum zeitgleichen Laden von Elektrofahrzeugen eingesetzt sein, die mehrere Energiespeichersysteme mit jeweils einer Ladebuchse aufweisen. Beispielsweise kann eine erste Ladebuchse eines LKWs oder einer Zugmaschine über eine erste Ladestelle 106 der Vorrichtung 100 geladen werden, und eine zweite Ladebuchse an einem Anhänger bzw. einem Sattelauflieger kann über eine zweite Ladestelle 106 der Vorrichtung 100 zeitgleich geladen werden.

Die Vorrichtung 100 kann durch ein modulares System, beispielsweise durch abschnittsweise Kombination von Trägern 104 aus einem modularen Baukasten, installiert und/oder nach einer Erstinstallation flexibel ausbaubar sein. Die Träger können entsprechend den in den Figuren 2A bis 2D gezeigten Abschnitten modular gefertigt sein. Vor Ort am Halteplatz 200 können die Trägermodule bei der Installation oder dem Ausbau kombiniert werden. Anschlussflächen der Trägermodule sind dazu ausgebildet, mit jedem anderen Trägermodul zu durchgehenden Schienen 114 für die Laufrollen 116 der beweglichen Ladestelle 106 fortgesetzt zu werden. Beispielsweise ist ausgehend von einer Installation der Vorrichtung 100, die einen für einzelne Elektrofahrzeuge bemessenen Halteplatz 200 abdeckt, ein Ausbau der Vorrichtung 100 möglich, die einen gesamten Hofbestand eines Betreibers von Lastkraftwagen und/oder Bussen abdeckt.

Die horizontal bewegliche Ladestelle 106 kann auch als mobile Ladesäule bezeichnet werden. Eine Ladestelle mit einem Ladekabel 110 kann als Single-Hub und eine Ladestelle 106 mit mehreren Ladekabeln 110 (beispielsweise 2 bis 4 Ladekabeln 110) kann als Multi-Hub bezeichnet werden. Das Ladekabel 110 mit dem Ladestecker 112 am freien Ende kann zusammenfassend auch als Ladeabgang der Ladestelle 106 bezeichnet werden.

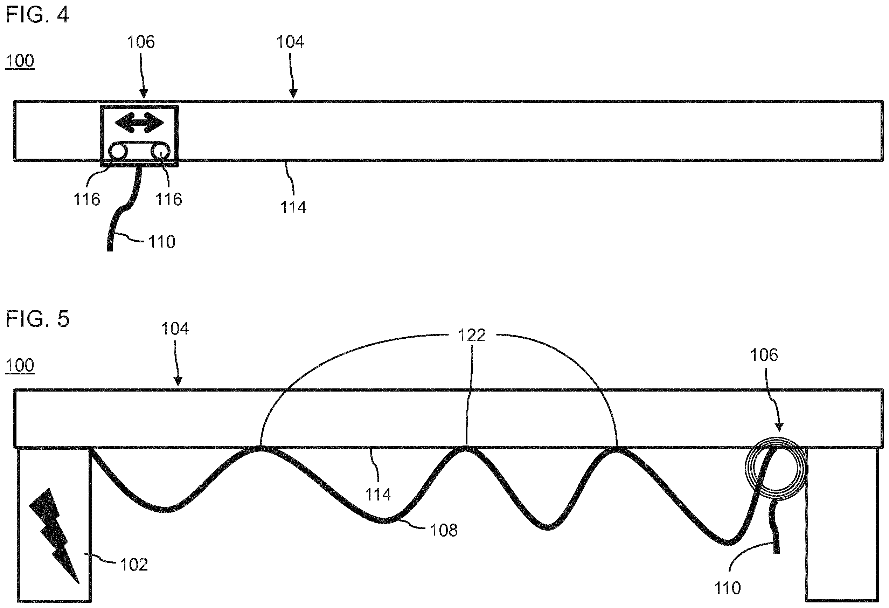

Figur 4 zeigt schematisch eine Seitenansicht eines dritten Ausführungsbeispiels der Vorrichtung 100, deren Ladestelle 106 optional angetrieben beweglich ist.

Die bewegliche Ladestelle 106 hängt an einer Laufkatze (der auch als Ladeschlitten bezeichnet werden kann), deren Laufrollen 116 von den Schienen 114 gestützt sind. In einer ersten Variante wird die Laufkatze, und damit die gesamte Ladestelle 106, am freien Ende des Ladekabels 110 wie ein Schlitten in der durch die Schienen 114 bestimmten Spur gezogen. Die Ladestelle 106 ist dadurch manuell beweglich.

In einer zweiten Variante ist die Laufkatze über einen parallel der Schienen 114 verlaufenden Seil- oder Kettenzug manuell oder motorgetrieben beweglich. Beispielsweise ist die Ladestelle 106 entlang der Schienen 114 selbstfahrend. Die von der Ladestelle 106 angefahrenen Punkte können vom Fahrzeugtyp abhängig in der Ladestellenelektronik 118 gespeichert und/oder auswählbar sein. Optional ist die Ladestelle 106 mit einer Ladepunkterkennung am Elektrofahrzeug ausgestattet. Die Ladepunkterkennung kann eine Position der Ladebuchse aufgrund einer Analyse eines Kamerabilds bestimmen, das von einer an der Ladestelle 106 angeordneten Kamera erfasst wird. Alternativ oder ergänzend kann die Ladestelle 106 einen Funkempfänger umfassen, der ein Lokalisationssignal des Elektrofahrzeugs empfängt zur Lokalisation der Ladebuchse. Alternativ oder ergänzend kann die Ladestellenelektronik 118 die Position der Ladebuchse aus einer Datenbank abfragen.

Die Ladestelle 106 fährt auf die Höhe des von der Ladepunkterkennung erkannten Anschlusses (Ladebuchse) am Elektrofahrzeug. D.h. die bewegliche Ladestelle 106 fährt motorgetrieben entlang des durch die Schienen 116 gebildeten Schienensystems (optional einschließlich einer Schwenkbewegung des Trägers 114 und/oder eines Abrollens des Ladekabels 110 und/oder des ggf. vorhandenen Halteseils 120) zur Ladebuchse am Elektrofahrzeug.

Figur 5 zeigt schematisch eine Seitenansicht eines vierten Ausführungsbeispiels der Vorrichtung 100 mit manueller Beweglichkeit. Die elektrische Verbindung 108 zwischen beweglicher Ladestelle 106 und Leistungselektronik 102 umfasst ein Kabel. Eine Länge des Kabels kann der Länge des Trägers 104 entsprechen. Das Kabel der elektrischen Verbindung 108 ist zur Leistungselektronik 102 hin am Träger 104 befestigt. Zwischen der Leistungselektronik 102 und Ladestelle 106 ist das Kabel der elektrischen Verbindung 108 an mehreren Zwischenrollen 122 längsbeweglich an den Schienen 114 des Trägers 104 abgestützt. Die außerhalb des Trägers 104 verlaufende elektrische Verbindung 108 gemäß dem vierten Ausführungsbeispiel wird auch als Schlaufenaufhängung bezeichnet. Die Zwischenrollen 122 sind bezogen auf die Länge des Kabels der elektrischen Verbindung 108 vorzugsweise äquidistant.

In jedem Ausführungsbeispiel können das Ladekabel 110 und der zugehörige Ladestecker 112 an der beweglichen Ladestelle 106 entnommen werden. Beispielsweise wird das Ladekabel 110 und der zugehörige Ladestecker 112 nach unten (d.h. weg vom Ladeschlitten) gezogen. Hierzu kann die Ladestelle 106 (beispielsweise am Ladeschlitten) eine in Figur 5 schematisch gezeigte Mechanik zum Aufrollen des Ladekabels 110 und/oder des ggf. vorhandenen Halteseils 120 umfassen.

In jedem Ausführungsbeispiel können das Ladekabel 110 und der zugehörige Ladestecker 112 mit der Hand aus der Ladestelle 106 herausgezogen werden. Alternativ oder ergänzend umfasst die Ladestelle 106 einen elektrischen Antrieb, der den Ladestecker 112 abgesenkt und anhebt. Beispielsweise wird der Ladestecker 106 zum Laden automatisch bis auf die Höhe der fahrzeugseitigen Ladebuchse abgesenkt.

Ferner kann bei jedem Ausführungsbeispiel der Träger 104 zumindest einseitig an einem Bauwerk, beispielsweise einer Hallenwand und/oder einer Laderampe, befestigt sein oder auf separaten Pfosten gestützt sein. In oder an einem der Pfosten kann, wie schematisch in Figur 5 gezeigt, die Leistungselektronik 102 angeordnet sein.

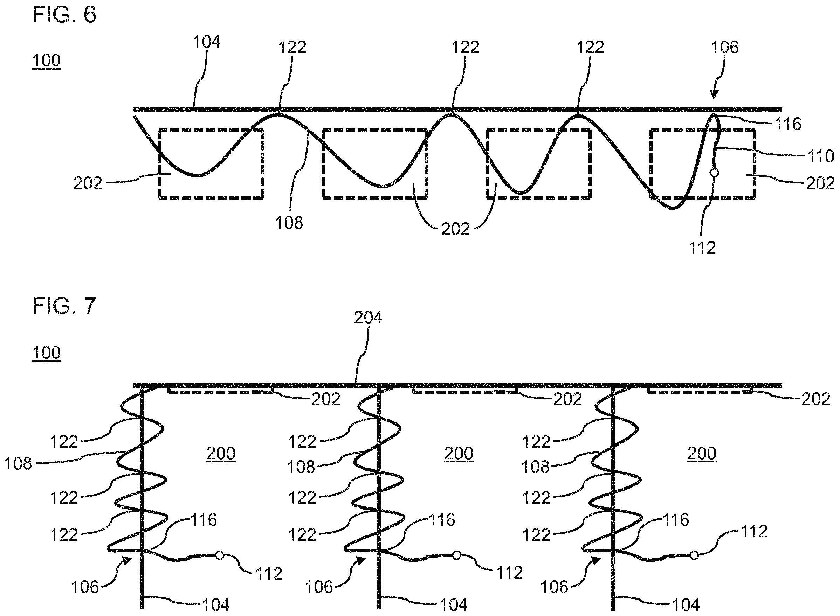

Figur 6 zeigt schematisch eine Seitenansicht eines fünften Ausführungsbeispiels der Vorrichtung 100. Der Träger 104 erstreckt sich, zumindest abschnittsweise, parallel mehrerer Ladetore 202. Die elektrische Verbindung 108 ist gemäß dem vierten Ausführungsbeispiel mit Zwischenrollen 122 ausgeführt. Das fünfte Ausführungsbeispiel ermöglicht eine besonders einfache Installation, beispielsweise an einer Laderampe, für ein wahlweises Laden einzelner Elektrofahrzeuge direkt an jedem Ladetor 202.

Figur 7 zeigt schematisch eine Draufsicht des sechsten Ausführungsbeispiels der Vorrichtung 100. Je ein Träger 104 erstreckt sich mit zugehörigen Schienen 114, zumindest abschnittsweise, horizontal und senkrecht zu den Ladetoren 202. Die Träger 104 verlaufen außerhalb der Halteplätze 200, beispielsweise zwischen benachbarten Halteplätzen 200. Das sechsten Ausführungsbeispiel ermöglicht ein zeitgleiches Laden an jedem Ladetor 202, wobei an jedem Ladetor 202 ein Elektrofahrzeug oder mehrere hintereinander stehende Elektrofahrzeuge entsprechend der Anzahl an Ladestellen 106 und Ladekabeln 110 am jeweiligen Träger 104 geladen werden können.

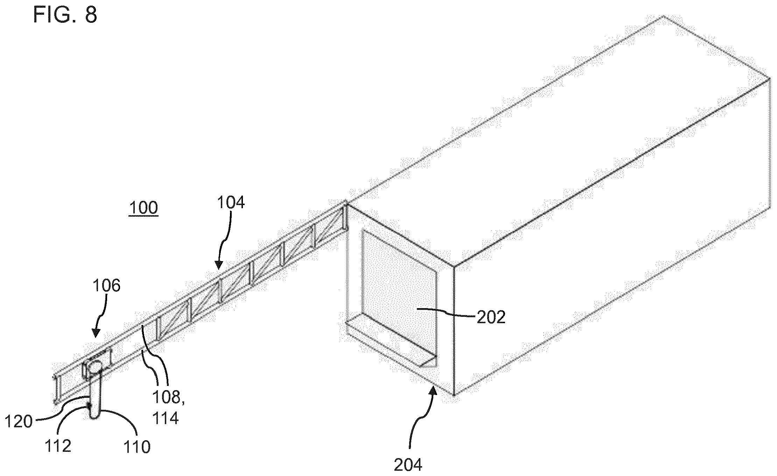

Figur 8 zeigt schematisch ein siebtes Ausführungsbeispiel der Vorrichtung 100. Längsstreben des Trägers 104 sind parallel und vertikal übereinander angeordnet. Der Träger 104 ist an einer Laderampe 204 befestigt, optional schwenkbeweglich. Zum befestigten Ende hin umfasst der Träger Querstreben, die zwischen den Längsstreben angeordnet sind. Zum dem befestigten Ende gegenüberliegenden Ende (das optional ein freies Ende für die Schwenkbeweglichkeit ist) fungieren die Längsstreben als Schienen 114, zwischen denen die Laufrollen 116 der beweglichen Ladestelle 106 geführt sind.

Das siebte Ausführungsbeispiel der Vorrichtung 100 kann, wie in Figur 8 gezeigt, an der Torseite eines Containers angeordnet sein. Die Vorrichtung 100 kann durch eine entsprechende Anzahl an Ladestellen 106 zum zeitgleichen Laden von mindestens 6 Elektrofahrzeugen ausgebildet sein.

Das durch die Schienen 114 gebildete Schienensystem kann sich in 2 Richtungen erstrecken und/oder verzweigen (beispielsweise mittels einer Weiche). Das durch die Schienen 114 gebildete Schienensystem ist insbesondere vorteilhaft für große Ladehöhe, beispielsweise eine fahrzeugseitige Ladebuchse auf einer Höhe von mehr als 1 Meter, da ein Benutzer nicht die Gewichtskraft des Ladekabels auf die Höhe der Ladebuchse anheben muss.

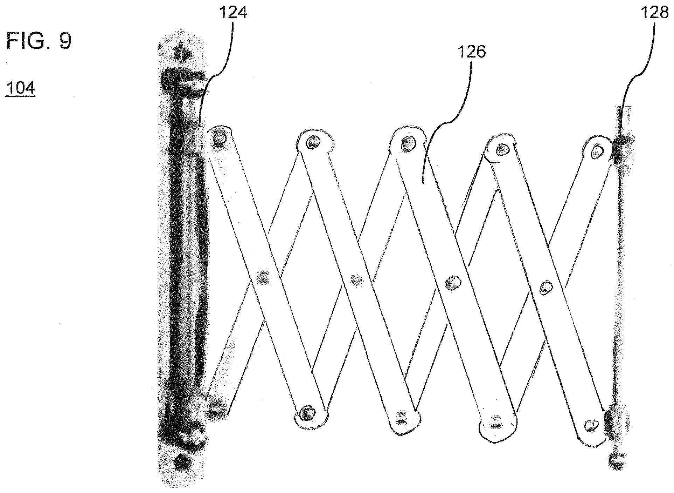

Figur 9 zeigt schematisch eine Ausgestaltung eines horizontal ausziehbaren Trägers 104. Der ausziehbare Träger 104 umfasst ein festes Ende 124, an dem der Träger optional schwenkbeweglich abgestützt ist, eine Mechanik 126 zum Ausziehen, d.h., Verlängern des Trägers 104, in horizontaler Richtung und ein freies Ende 128. Der ausziehbare Träger 104 kann in den vorgenannten Ausführungsbeispielen den schienenbasierten Träger ersetzen oder ergänzen, indem mindestens eine Ladestelle 106 am freien Ende 128 befestigt ist. Die Mechanik kann eine Teleskopmechanik oder, wie in Figur 9 schematisch gezeigt, eine Scherenmechanik umfassen.

Jedes Ausführungsbeispiel kann ein DC-Ladesystem umfassen. Die Funktionalität des DC-Ladesystems kann zwischen der Leistungselektronik 102 und der Ladestellenelektronik 118 aufgeteilt sein. Das DC-Ladesystem umfasst einen Gleichrichter, der eine Spannung eines Wechselspannungsnetzes in eine geregelte Gleichspannung wandelt und dem zu ladenden Elektrofahrzeug zur Verfügung stellt. Die Laderegelung wird dabei vom Elektrofahrzeug, beispielsweise dessen BMS, übernommen. Das DC-Ladesystem kann einen Ladepunkt, die Benutzereinheit und/oder die Leistungselektronik 102 umfassen. Der Ladepunkt kann Komponente der Benutzereinheit sein und das Ladekabel 110 und den Ladestecker 112 (beispielsweise einen Stecker gemäß CCS2) umfassen. An einem Ladepunkt kann zu einer Zeit genau ein Elektrofahrzeug angeschlossen werden. Die Benutzereinheit umfasst die Bedien- und Anzeigeeinheit des DC-Ladesystems mit Ladekabel 110, Ladestecker 112 und der Aufnahme für den Ladestecker 112 zur Verwahrung des Ladesteckers 112 im stromlosen Zustand. Die Leistungselektronik 102 ist eine Komponente des DC-Ladesystems in modularer Bauweise. Die Leistungselektronik 102 ist separiert von der Benutzereinheit.

Mittels der Schienen 114 und/oder durch das Ausziehen des Trägers 104 der Vorrichtung 100 ist die mindestens eine Ladestellen 106, insbesondere die mindestens eine Benutzereinheit, an unterschiedliche Positionen bezüglich des Elektrofahrzeugs beweglich und vorzugsweise dort arretierbar. Dadurch ist ermöglicht, längs der Abstellrichtung des Elektrofahrzeugs verschiedene Fahrzeuglängen und Positionen auszugleichen.

Beispielsweise kann der Halteplatz 200 eine Parkspur in einem Busdepot oder eine Standfläche vor einer Verladerampe sein, wobei die Nutzfahrzeuge unterschiedliche Fahrzeuglängen aufweisen. Auch kann der Halteplatz 200 vor mehreren Ladetoren eines Verteilerzentrums liegen, wobei sich mindestens eine Schiene 114 der Vorrichtung 100 quer zur Parkrichtung erstreckt, an der die Ladestelle 106 zu den Elektrofahrzeug bewegt wird. Die Vorrichtung 100 kann auch zwei oder mehr parallele Schienen 114 umfassen, um zusätzlich die Längenvarianz der Fahrzeuge (beispielsweise in einem Bereich von 6 m bis 12 m und einem Bereich von 12 m bis 18 m) abzudecken.

Jedes der vorstehenden Ausführungsbeispiele kann an einem Busdepot oder einer Standfläche mit einer Vielzahl von Halteplätzen 200 ausgeführt sein. Die Halteplätze 200 können örtlich fest vorgezeichnet oder durch das Abstellen der Elektrofahrzeuge, d.h. durch die Belegung des Busdepots oder der Standfläche, örtlich variabel bestimmbar sein. Die Träger 104 können mit den geraden und/oder gekrümmten Abschnitten der Schienen 114 sowie Verzweigungen (beispielsweise an den Kreuzungen und/oder den Weichen der Schienen 114) die Halteplätze 200 mit einer bestimmten Dichte überdecken.

Durch einen ersten elektrischen Antrieb kann jede Ladestelle 106 entlang der Träger 104 über das Busdepot oder die Standfläche horizontal beweglich sein, beispielsweise angetrieben gemäß einem der hierin beschriebenen Ausführungsbeispiele. Alternativ oder ergänzend kann jede Ladestelle 106 durch einen zweiten elektrischen Antrieb vertikal beweglich, insbesondere vom Träger 104 herab absenkbar, sein, beispielsweise angetrieben gemäß einem der hierin beschriebenen Ausführungsbeispiele.

Der erste elektrische Antrieb und/oder der zweite elektrische Antrieb kann von einer Ladepunkterkennung, beispielsweise gemäß dem vorgenannten Ausführungsbeispiel der Ladepunkterkennung, insbesondere kamerabasiert oder funkbasiert, gesteuert sein. Der erste elektrische Antrieb und/oder der zweite elektrische Antrieb kann den Ladestecker 112 automatisch bis zur erkannten Position der Ladebuchse des Elektrofahrzeugs verfahren. So können der Ort auf dem Busdepot oder der Standfläche sowie die Höhe der Ladebuchse automatisch erreicht werden. Hierbei kann der erste elektrische Antrieb auch das Stellen von Weichen umfassen, so dass die elektrisch angetriebene Ladestelle 106 sämtliche Orte auf dem Busdepot oder der Standfläche, beispielsweise in einem durch die Träger 104 bzw. die Schienen 114 bestimmten Raster, erreichen kann.

Der erste elektrische Antrieb, und/oder optional ein dritter elektrischer Antrieb der Ladestelle 106 (beispielsweise für jeden der Ladestelle 106 zugeordneten Ladestecker 112), ist ferner dazu ausgebildet, den Ladestecker 112 in die Ladebuchse des Elektrofahrzeugs zu bewegen. Alternativ oder ergänzend ist das Elektrofahrzeug dazu ausgebildet, den durch den ersten und zweiten elektrischen Antrieb vor der Ladebuchse positionierten Ladestecker zu greifen und diesen in die Ladebuchse zu ziehen.

In einer einfacheren Ausgestaltung und/oder als Bedienoption (beispielsweise bei einem Defekt des Antriebs oder einer inkompatiblen Ladepunkterkennung) können einzelne der durch die vorgenannten elektrischen Antriebe bewirkten Bewegungen manuell ausführbar sein.

Die aufwändige Leistungselektronik 102 kann bei der Bewegung der Ladestellen 106 ortsfest bleiben. In jedem Ausführungsbeispiel kann die Ladestelle 106, beispielsweise die Benutzereinheit mit dem Ladepunkt, die elektrische Verbindung 108 über Stromabnehmer herstellen. Dabei kann der elektrischen Verbindung 108 auch die elektrische Leistung des elektrischen Antriebs zur Längsbewegung der Ladestelle 106 entnommen werden.

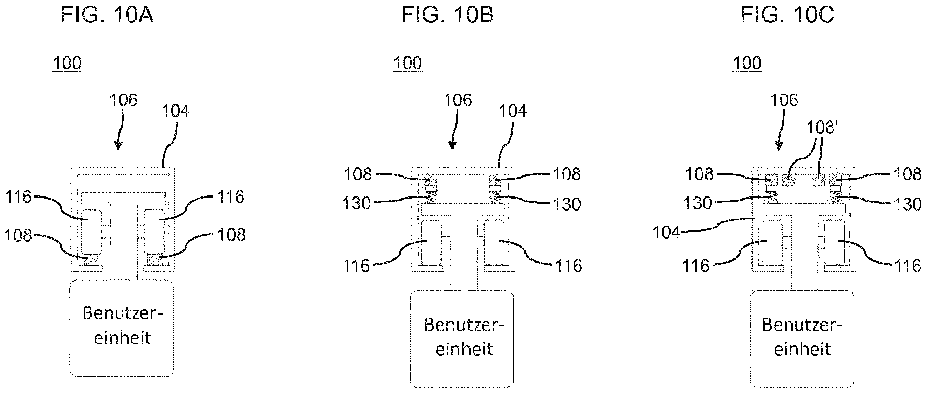

Die Figuren 10A bis 10C zeigen schematische Querschnitte durch einen beispielhaften Träger 104, entlang dem Stromleiter die elektrische Verbindung 108 zwischen der Leistungselektronik 102 und der Ladestelle 106 herstellen. Im in Figur 10A gezeigten Ausgestaltungsbeispiel sind die Stromleiter elektrisch isoliert auf dem Unterflansch angeordnet. Die Laufrollen 116 dienen als Stromabnehmer der Ladestelle 106.

Im in Figur 10B gezeigten Ausgestaltungsbeispiel sind die Stromleiter der elektrischen Verbindung 108 oberhalb der Laufkatze angeordnet. Auf der Laufkatze sind in räumlicher Zuordnung zu jeweils einem der Stromleiter vertikal vorgespannte Stromabnehmer 130 angeordnet. Optional sind, wie in Figur 10C gezeigt, separate Stromleiter für eine elektrische Verbindung 108' zwischen Leistungselektronik 102 und weiteren Ladestellen 106 entlang desselben Trägers 104 angeordnet.

Wie dem Fachmann anhand vorstehender Ausführungsbeispiele ersichtlich ist, kann die Vorrichtung 100 eine variable Positionierung von Ladestellen als Ladepunkte und/oder von Benutzereinheiten (insbesondere Ladesteckern) zum Laden von Elektrofahrzeugen ermöglichen. Die Elektrofahrzeuge können BEV- und PHEV-Nutzfahrzeugen umfassen. Der Ladestrom kann mittels der Vorrichtung von oben zugeführt werden. Eine Verkehrsfläche um die Elektrofahrzeuge bleibt frei von Installationen.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Anwendung der Vorrichtung zum Laden mindestens eines Elektrofahrzeugs oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Ladevorrichtung
- 102: Leistungselektronik
- 104: Träger
- 106: Ladestelle
- 108: Elektrische Verbindung
- 108': Elektrische Verbindung für weitere Ladestelle
- 110: Ladekabel
- 112: Ladestecker
- 114: Schiene
- 116: Laufrolle
- 118: Ladestellenelektronik
- 120: Halteseil
- 122: Zwischenrolle
- 124: Festes Ende des Trägers
- 126: Scherenmechanik
- 128: Freies Ende des Trägers
- 130: Stromabnehmer
- 200: Halteplatz
- 202: Ladetor
- 204: Laderampe

## Patentansprüche

1. Vorrichtung (100) zum Laden mindestens eines Elektrofahrzeugs, umfassend:
mindestens eine stationäre Leistungselektronik (102), die jeweils dazu ausgebildet ist, einen Ladestrom zum Laden eines elektrischen Energiespeichers eines Elektrofahrzeugs, vorzugsweise eines Traktionsenergiespeichers eines Elektrofahrzeugs, bereitzustellen;
einen Träger (104), der vorzugsweise sich horizontal erstreckt und/oder horizontal ausziehbar ist; und
mindestens eine vom Träger (104) beweglich gestützte Ladestelle (106), welche mit der mindestens einen stationären Leistungselektronik (102) elektrisch verbunden ist, und an welcher mindestens ein Ladekabel (110), vorzugsweise mit einem Ladestecker (112), zur Bereitstellung des Ladestroms angeordnet ist,
**dadurch gekennzeichnet, dass**
der Träger (104) mindestens eine sich in der Längsrichtung des Trägers (104) erstreckende Schiene (114) umfasst, und wobei die Ladestelle (106) mindestens eine Laufrolle (116) umfasst, die auf der Schiene (114) längsbeweglich aufliegt,
der Träger (104) ein ortsfestes Ende (124) und ein bewegliches Ende (128) umfasst, und
die elektrische Verbindung (108) zwischen der mindestens einen Leistungselektronik (102) und der mindestens einen beweglichen Ladestelle (106) sich entlang des Trägers erstreckende Stromleiter und die Stromleiter kontaktierende Stromabnehmer (130) seitens der beweglichen Ladestelle (106) umfasst.

2. Vorrichtung nach Anspruch 1, wobei die Leistungselektronik (102) und/oder eine an der Ladestelle angeordnete Ladestellenelektronik (118) dazu ausgebildet ist, den Ladestrom zu steuern.

3. Vorrichtung nach Anspruch 1 oder 2, wobei der Ladestecker (112) oder eine Funkschnittstelle der Vorrichtung zur Kommunikation mit einem Batteriemanagementsystem des Elektrofahrzeugs ausgebildet ist, und die Leistungselektronik (102) dazu ausgebildet ist, den Ladestrom aufgrund der Kommunikation zu steuern.

4. Vorrichtung nach einem der Ansprüche 1 bis 3, wobei die Vorrichtung (100) einen elektrischen Antrieb umfasst, der dazu ausgebildet ist, die mindestens eine Ladestelle (106) entlang der Längsrichtung des Trägers (104) zu bewegen.

5. Vorrichtung nach Anspruch 4, wobei die Ladestelle (106) dazu ausgebildet ist, eine Ladeposition relativ zum Elektrofahrzeug zu bestimmen und sich durch die Längsbewegung der bestimmten Ladeposition zu nähern.

6. Vorrichtung nach einem der Ansprüche 1 bis 5, wobei das mindestens eine Ladekabel (110) von der vom Träger (104) gestützten Ladestelle (106) herabhängt.

7. Vorrichtung nach Anspruch 6, wobei das mindestens eine Ladekabel (110) zugfest an der Ladestelle (106) angeordnet ist für eine Zugkraft zur horizontalen Bewegung der Ladestelle (106).

8. Vorrichtung nach einem der Ansprüche 1 bis 7, wobei das mindestens eine Ladekabel (110) an der horizontal beweglichen Ladestation (106) aufrollbar und/oder zugelastisch angeordnet ist.

9. Vorrichtung nach einem der Ansprüche 1 bis 8, wobei der Träger um das ortsfeste Ende (124) schwenkbeweglich ist.

10. Vorrichtung nach einem der Ansprüche 1 bis 9, wobei die stationäre Leistungselektronik (102) am ortsfesten Ende (124) des Trägers (104) oder an einer Stütze des ortsfesten Endes (124) angeordnet ist.

11. Vorrichtung nach einem der Ansprüche 1 bis 10, wobei die elektrische Verbindung (108) zwischen der mindestens einen Leistungselektronik (102) und der beweglichen Ladestelle (106) ein an mehreren Zwischenstellen (122) am Träger längsbeweglich abgestütztes Stromkabel umfasst.

12. Halteplatz (200) für mindestens ein Elektrofahrzeug, insbesondere ein Nutzfahrzeug, umfassend eine Vorrichtung (100) gemäß einem der Ansprüche 1 bis 11, wobei die mindestens eine Leistungselektronik (102) an eine stationäre Stromquelle angeschlossen ist, und mindestens ein Ende (124) des Trägers (104) am Halteplatz (200) ortsfest befestigt ist.

## Claims

1. A device (100) for charging at least one electric vehicle, comprising:
at least one stationary power electronics system (102) which is designed in each case to provide a charging current for charging an electrical energy store of an electric vehicle, preferably a traction energy store of an electric vehicle;
a carrier (104) which preferably extends horizontally and/or can fold out horizontally; and
at least one charging point (106) which is movably supported by the carrier (104) and which is electrically connected to the at least one stationary power electronics system (102) and on which at least one charging cable (110), preferably comprising a charging plug (112), is arranged to provide the charging current, **characterized in that**
the carrier (104) comprises at least one rail (114) extending in the longitudinal direction of the carrier (104), and wherein the charging point (106) comprises at least one roller (116) which bears on the rail (114) in a longitudinally movable manner,
the carrier (104) comprises an immovable end (124) and a movable end (128), and
the electrical connection (108) between the at least one power electronics system (102) and the at least one movable charging point (106) comprises current conductors which extend along the carrier and current collectors (130) on the side of the movable charging point (106) which contact the current conductors.

2. The device according to Claim 1, wherein the power electronics system (102) and/or a charging point electronics system (118) arranged at the charging point are/is designed to control the charging current.

3. The device according to Claim 1 or 2, wherein the charging plug (112) or a radio interface of the device is designed for communication with a battery management system of the electric vehicle and the power electronics system (102) is designed to control the charging current based on the communication.

4. The device according to one of Claims 1 to 3, wherein the device (100) comprises an electric drive which is designed to move the at least one charging point (106) along the longitudinal direction of the carrier (104).

5. The device according to Claim 4, wherein the charging point (106) is designed to determine a charging position relative to the electric vehicle and to move closer through the longitudinal movement of the determined charging position.

6. The device according to one of Claims 1 to 5, wherein the at least one charging cable (110) is suspended from the charging point (106) which is supported by the carrier (104).

7. The device according to Claim 6, wherein the at least one charging cable (110) is arranged on the charging point (106) tautly for traction for the horizontal movement of the charging point (106).

8. The device according to one of Claims 1 to 7, wherein the at least one charging cable (110) is arranged on the horizontally movable charging station (106) so as to be able to roll and/or in a tensionally elastic manner.

9. The device according to one of Claims 1 to 8, wherein the carrier is able to pivot about the immovable end (124) .

10. The device according to one of Claims 1 to 9, wherein the stationary power electronics system (102) is arranged at the immovable end (124) of the carrier (104) or on a support of the immovable end (124).

11. The device according to one of Claims 1 to 10, wherein the electrical connection (108) between the at least one power electronics system (102) and the movable charging point (106) comprises a power cable supported in a longitudinally movable manner at several intermediate points (122) on the carrier.

12. A stopping place (200) for at least one electric vehicle, in particular a commercial vehicle, comprising a device (100) according to one of Claims 1 to 11, wherein the at least one power electronics system (102) is connected to a stationary power source and at least one end (124) of the carrier (104) is immovably fixed at the stopping place (200).

## Revendications

1. Dispositif (100) de chargement d'au moins un véhicule électrique, ledit dispositif comprenant :
au moins un système électronique de puissance stationnaire (102) qui est conçu pour fournir un courant de charge destiné à charger un accumulateur d'énergie électrique d'un véhicule électrique, de préférence un accumulateur d'énergie de traction d'un véhicule électrique ;
un support (104) qui s'étend de préférence horizontalement et/ou qui est extensible horizontalement ; et
au moins un point de charge (106) qui est supporté de manière mobile par le support (104) et qui est relié électriquement à l'au moins un système électronique de puissance stationnaire (102), et au niveau duquel au moins un câble de charge (110), pourvu de préférence d'un connecteur de charge (112), est disposé de manière à fournir le courant de charge,
**caractérisé en ce que**
le support (104) comprend au moins un rail (114) qui s'étend dans la direction longitudinale du support (104), et le point de charge (106) comprenant au moins un galet de roulement (116) qui vient en appui sur le rail (114) de manière mobile longitudinalement,
le support (104) comprend une extrémité fixe (124) et une extrémité mobile (128), et
la liaison électrique (108) entre l'au moins un système électronique de puissance (102) et l'au moins un point de charge mobile (106) comprend des conducteurs de courant qui s'étendent le long du support et des collecteurs de courant (130) du côté du point de charge mobile (106) qui viennent en contact avec les conducteurs de courant.

2. Dispositif selon la revendication 1, le système électronique de puissance (102) et/ou le système électronique de point de charge (118) disposé au niveau du point de charge étant conçus pour commander le courant de charge.

3. Dispositif selon la revendication 1 ou 2, le connecteur de charge (112) ou une interface radio du dispositif étant conçu(e) pour communiquer avec un système de gestion de batterie du véhicule électrique, et le système électronique de puissance (102) étant conçu pour commander le courant de charge sur la base de la communication.

4. Dispositif selon l'une des revendications 1 à 3, le dispositif (100) comprenant un entraînement électrique qui est conçu pour déplacer l'au moins un point de charge (106) suivant la direction longitudinale du support (104) .

5. Dispositif selon la revendication 4, le point de charge (106) étant conçu pour déterminer une position de charge par rapport au véhicule électrique et pour se rapprocher de la position de charge déterminée par mouvement longitudinal.

6. Dispositif selon l'une des revendications 1 à 5, l'au moins un câble de charge (110) dépendant du point de charge (106) supporté par le support (104).

7. Dispositif selon la revendication 6, l'au moins un câble de charge (110) étant disposé au point de charge (106) de manière à résister à la traction pour une force de traction par rapport au mouvement horizontal du point de charge (106).

8. Dispositif selon l'une des revendications 1 à 7, l'au moins un câble de charge (110) étant disposé au poste de charge mobile horizontalement (106) de manière enroulable et/ou élastique à la traction.

9. Dispositif selon l'une des revendications 1 à 8, le support étant pivotant autour de l'extrémité fixe (124).

10. Dispositif selon l'une des revendications 1 à 9, le système électronique de puissance stationnaire (102) étant disposé à l'extrémité fixe (124) du support (104) ou sur un support de l'extrémité fixe (124).

11. Dispositif selon l'une des revendications 1 à 10, la liaison électrique (108) entre l'au moins un système électronique de puissance (102) et le point de charge mobile (106) comprenant un câble d'alimentation supporté de manière mobile longitudinalement en une pluralité de points intermédiaires (122) sur le support.

12. Station (200) destinée à au moins un véhicule électrique, notamment un véhicule utilitaire, et comprenant un dispositif (100) selon l'une des revendications 1 à 11, l'au moins un système électronique de puissance (102) étant raccordé à une source de courant stationnaire, et au moins une extrémité (124) du support (104) étant fixée de manière fixe à la station (200).
